# EUROPEAN PATENT APPLICATION

(11) **EP 3 358 699 A1**
(43) Date of publication of application: **08.08.2018**
(21) Application number: 17154709.4
(22) Date of filing: 03.02.2017
(51) Int. Cl.: H02J 7/00

(54) **A BATTERY PROTECTION CIRCUIT, BATTERY PACK, BATTERY MANAGEMENT SYSTEM AND METHOD**

(71) Applicant: Vestel Elektronik Sanayi ve Ticaret A.S., 45030 Manisa (TR)
(72) Inventor: Öcal, Ömür, 45030 Manisa (TR); Memisoglu, Görkem, 45030 Manisa (TR); Aabbak, Mehmet, 45030 Manisa (TR)
(74) Representative: Ascherl, Andreas

(57) **Abstract**

The present invention provides a battery protection circuit at least comprises a plurality of first electrical contacts (V1, V2, ...Vn) and a second electrical contact (V3). Each of the plurality of first electrical contacts (V1, V2, ...Vn) is configured to be electrically connected to a respective one of a plurality of terminals of a battery (10) having the same polarity as each other and different voltages from each other when the battery is fully charged. The second electrical contact (V3) is configured to be electrically connected to a terminal of the battery (10) having the opposite polarity to the plurality of terminals of the same polarity as each other. Such a battery protection circuit may be used with a rechargeable battery having more than two terminals of the same polarity as each other, which have different voltages from each other when the battery is fully charged. Since the battery protection circuit may be connected to terminals which have the same polarity as each other, but which are of different voltages from each other, the same battery protection circuit may also be used with different varieties of battery at different times. In other aspects, the present invention also provides a battery pack comprising a rechargeable battery and such a battery protection circuit, a battery management system comprising a rechargeable battery and such a battery protection circuit, an electrically powered device comprising such a battery management system, and a method of managing a battery using such a battery protection circuit.

## Description

The present invention relates to a battery protection circuit according to claim 1, a battery pack according to claim 5, a battery management system according to claim 9, an electrically powered device according to claim 11, and a method according to claim 12.

### Background of the Invention

Rechargeable batteries are in widespread use today, particularly in portable or mobile devices, such as in laptop computers, mobile phones and larger devices, like electrically powered vehicles.

Battery management systems (BMSs) are well known for controlling the charging and discharging of rechargeable batteries, in order to achieve such goals as maximizing the lifetime (*i.e.* the total number of charge/discharge cycles) of a rechargeable battery, maximizing the battery life (*i.e.* the length of time that a rechargeable battery can be used to power a device from a single charge), as well as to protect the battery from overvoltage and/or overcurrent conditions, excessive temperatures, and the like.

Purely for the sake of illustration, one may take a laptop computer as an example of an electrically powered device which comprises a battery management system. In such a case, the battery management system generally comprises a battery protection module, which is connected to a rechargeable battery contained in a removable battery pack, as well as to a power module of the computer and to a human-machine interface (HMI) of the computer. An example of the battery protection module includes an integrated circuit, such as the NE57600 available from Philips Semiconductors of the Netherlands. If the battery protection module is included within the removable battery pack together with the rechargeable battery, as is often the case, the battery pack is usually referred to as a "smart" battery pack. The HMI allows a user to communicate with the battery protection module, for example by observing a state of charge of the battery and by selecting an operating mode for the battery, such as a power-saving mode, for example.

Most batteries have only two terminals of opposite polarities from each other. These terminals are usually referred to as the cathode and the anode of the battery. On the other hand, some batteries have more than two terminals, such as one anode and two cathodes, the latter of which have different voltages from each other when the battery is fully charged. Such batteries with more than two terminals of the same polarity as each other are intended for use at different times with different ones of a plurality of devices which have different operating voltages from each other. Thus one and the same such multi-terminal battery may be used to power different devices at different times. There is a problem, however, in that battery management systems do not appear to exist in the art for managing rechargeable batteries having more than two terminals of the same polarity as each other, but with different voltages from each other when fully charged.

### Object of the Invention

It is therefore an object of the invention to provide an efficient battery protection circuit, a battery pack, a battery management system, an electrically powered device, and a method of managing a battery.

### Description of the Invention

The object of the invention is solved by a battery protection circuit according to claim 1. The battery protection circuit at least comprises a plurality of first electrical contacts and a second electrical contact. Each of the plurality of first electrical contacts is configured to be electrically connected to a respective one of a plurality of terminals of a battery having the same polarity as each other and different voltages from each other when the battery is fully charged. The second electrical contact is configured to be electrically connected to a terminal of the battery having the opposite polarity to the plurality of terminals of the same polarity as each other.

This solution is beneficial because such a battery protection circuit may be used with a rechargeable battery having more than two terminals of the same polarity as each other, which have different voltages from each other when the battery is fully charged. Since the battery protection circuit may be connected to terminals which have the same polarity as each other, but which are of different voltages from each other, the same battery protection circuit may also be used with different varieties of battery at different times.

Advantageous embodiments of the invention may be configured according to any claim and/or part of the following description.

Preferably, the plurality of first electrical contacts is configured to be electrically connected to respective ones of a plurality of cathodes of the battery and the second electrical contact is configured to be electrically connected to an anode of the battery. This has the advantage that the battery protection circuit is then best adapted to the most commonly encountered types of multi-terminal batteries.

Preferably, the battery protection circuit at least comprises a balancing circuit configured to balance a charge of each of a plurality of cells of the battery with each other, even if at least two of the cells have different nominal voltages from each other when fully charged, via the plurality of first electrical contacts and the second electrical contact. This has the advantage of allowing the battery protection circuit to be used for battery balancing, as well as for protecting the battery against such things as overvoltage and/or overcurrent conditions, excessive temperatures, and the like.

If so, the battery protection circuit preferably further comprises a feedback system configured to receive status information concerning the status of at least one of the plurality of cells and the battery, as well as a control unit configured to receive the status information from the feedback system and to control the balancing circuit to balance the charge of the cells with each other on the basis thereof.

The present invention also relates to a battery pack. The battery pack at least comprises a rechargeable battery comprising a plurality of cells, a plurality of terminals having the same polarity as each other and different voltages from each other when the battery is fully charged, and a terminal having the opposite polarity to the plurality of terminals of the same polarity as each other, as well as a battery protection module comprising a battery protection circuit as described herein. In such a battery pack, the plurality of first electrical contacts of the battery protection module is electrically connected to the plurality of terminals of the battery having the same polarity as each other, and the second electrical contact of the battery protection module is electrically connected to the terminal of the battery having the opposite polarity to the plurality of terminals.

In some possible embodiments, at least two of the plurality of cells may have different nominal voltages from each other when fully charged.

In one possible embodiment, the battery and the battery protection module may be separate components of the battery pack. This is beneficial because it allows one and the same battery protection module to be used with different batteries by interchanging the battery. In another possible alternative embodiment, however, the battery and the battery protection module may be integrated into a single component of the battery pack. This can be advantageous in providing the battery pack with a reduced form factor.

The present invention also relates to a battery management system. The battery management system at least comprises a rechargeable battery comprising a plurality of cells, a plurality of terminals having the same polarity as each other and different voltages from each other when the battery is fully charged, and a terminal having the opposite polarity to the plurality of terminals of the same polarity as each other. The battery management system also comprises a battery protection module comprising a battery protection circuit as described herein, a human-machine interface of an electrically powered device, and a power module of the electrically powered device. The plurality of first electrical contacts of the battery protection module is electrically connectable to the plurality of terminals of the battery having the same polarity as each other, and the second electrical contact of the battery protection module is electrically connectable to the terminal of the battery having the opposite polarity to the plurality of terminals. Moreover, the battery protection module is configured to send messages to and receive messages from the human-machine interface, and the battery is electrically connectable to the power module of the electrically powered device in a circuit comprising one of the plurality of terminals of the battery having the same polarity as each other and the terminal of the battery having the opposite polarity to the plurality of terminals of the same polarity.

This solution is beneficial because it allows a plurality of different batteries to be used with different electrically powered devices under the control of the battery management system.

In some possible embodiments of the battery management system, at least two of the plurality of cells may have different nominal voltages from each other when fully charged.

The present invention also relates to an electrically powered device comprising a battery management system as described herein. The electrically powered device may be a portable computer, an electronic communications device like a mobile phone, an electrically powered toy, a biomedical device, or an electrically powered vehicle, for example.

The present invention further relates to a method of managing a battery, wherein the battery comprises a plurality of cells, a plurality of terminals having the same polarity as each other and different voltages from each other when the battery is fully charged, and a terminal having the opposite polarity to the plurality of terminals of the same polarity as each other. The method at least comprises electrically connecting a battery protection circuit to the battery, comprising connecting each one of a plurality of first electrical contacts of the battery protection circuit to a respective one of the plurality of terminals of the battery having the same polarity as each other, and connecting a second electrical contact of the battery protection circuit to the terminal of the battery having the opposite polarity to the plurality of terminals of the same polarity as each other. The method also comprises then monitoring status information concerning at least one of the plurality of cells and the battery, and charging or discharging at least one of the cells at least partially on the basis of the status information.

Preferably, the method further comprises selecting at least one of the plurality of cells and the battery, and monitoring the status information comprises measuring a voltage of the selected ones of the cells and/or battery. This is beneficial because it allows a selected subset of the cells to be individually charged.

Preferably, monitoring the status information comprises at least one of measuring a state of charge of a selected one of the cells, measuring a temperature of the battery, and measuring a state of balance of the charge of the plurality of cells with each other.

Preferably, the method further comprises at least one of sending and receiving a message from a human-machine interface, and charging or discharging at least one of the cells at least partially on the basis of the message. This has the advantage of allowing the charging and discharging of the battery to be controlled by a user.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a circuit diagram of a known battery management system;
Figs. 2A and 2B are schematic block diagrams of two possible alternative embodiments of a battery management system;
Figs. 3A and 3B are further schematic diagrams of the alternative embodiments of battery management system respectively shown in Figs. 2A and 2B;
Fig. 4 is a schematic block diagram of exemplary components of any of the battery management systems shown in Figs. 2A to 3B; and
Fig. 5 is a state diagram illustrating a method of operating a battery management system such as that shown in Fig. 4.

### Detailed Description

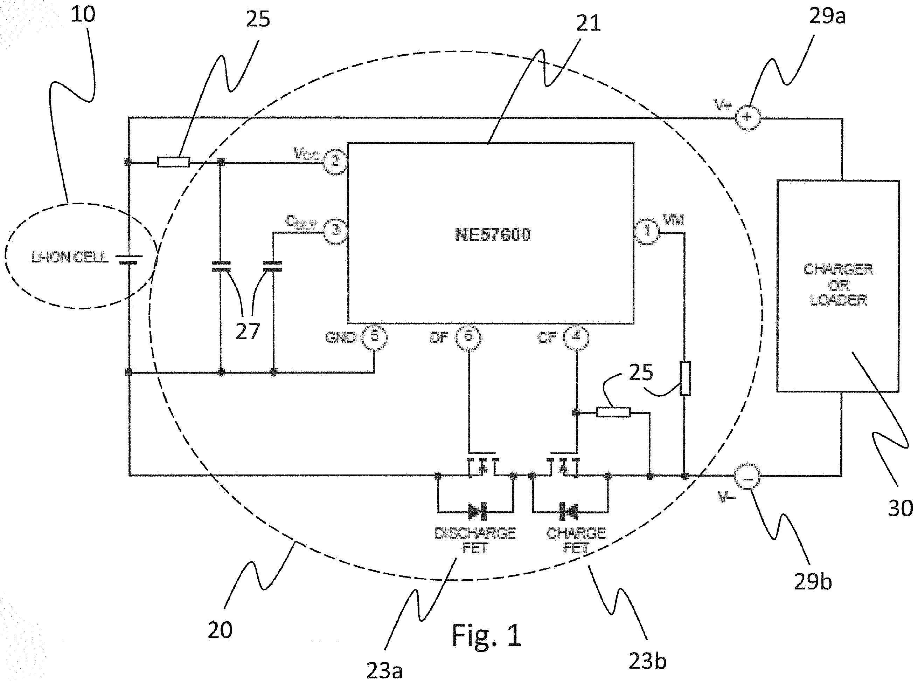

Fig. 1 is a circuit diagram of a known battery management system. The battery management system comprises a rechargeable battery 10, a battery protection module 20 and an electrical charger and/or load 30. Purely by way of example, the battery 10 may comprise one or more lithium-ion cells. The battery protection module 20 may comprise an integrated circuit 21, such as the NE57600 available from Philips Semiconductors of the Netherlands, having a plurality of pins, numbered 1 to 6 in Fig. 1. The battery protection module 20 may also comprise other active or passive circuit components such as charging and discharging field effect transistors (FETs) 23a, 23b, resistors 25 and capacitors 27. The charger and/or load 30 may for example comprise an electrically powered device, such as a portable computer, an electronic communications device like a mobile phone, an electrically powered toy, a biomedical device, an electrically powered vehicle, and so on. The charger and/or load 30 may comprise an electrical charger which is integral to the electrically powered device or which is separate therefrom. The rechargeable battery 10 and the battery protection module 20 are usually housed together in a battery pack, which is connectable to the charger and/or load 30 by means of positive and negative electrical terminals 29a, 29b, although it is also possible for the battery protection module 20 to be housed in the electrically powered device 30, rather than in the battery pack. It should be noted that in the known battery management system of Fig. 1, the integrated circuit 21 of the battery protection module 20 is electrically connected to the battery 10 via only two electrical contacts between the positive and negative electrodes (cathode and anode) of the battery 10 on the one hand, which are respectively connected to the pins numbered 2 and 5 of the integrated circuit 21 on the other.

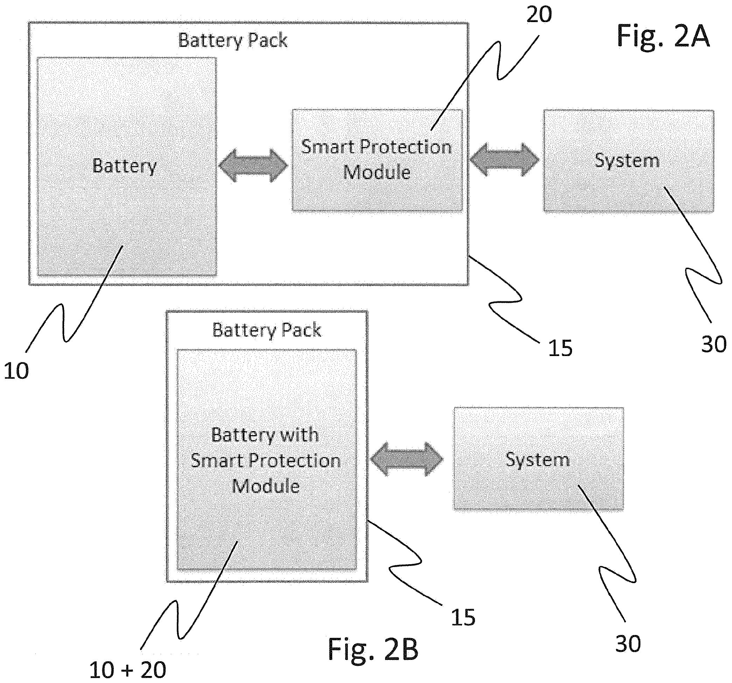

Figs. 2A and 2B show two possible alternative embodiments of a battery management system according to the invention. In both embodiments, the battery management system comprises a rechargeable battery 10 and a battery protection module 20, both of which are housed within a battery pack 15. The battery management system in each case further comprises an electrical system 30, such as an electrical charger and/or load, which is connectable to the battery pack 15. The two embodiments of Figs. 2A and 2B differ from each other in that in the embodiment of Fig. 2A, the rechargeable battery 10 and the battery protection module 20 are separate components of the battery pack 15, whereas in the embodiment of Fig. 2B, the battery 10 and the battery protection module 20 are integrated with each other as a single component of the battery pack 15.

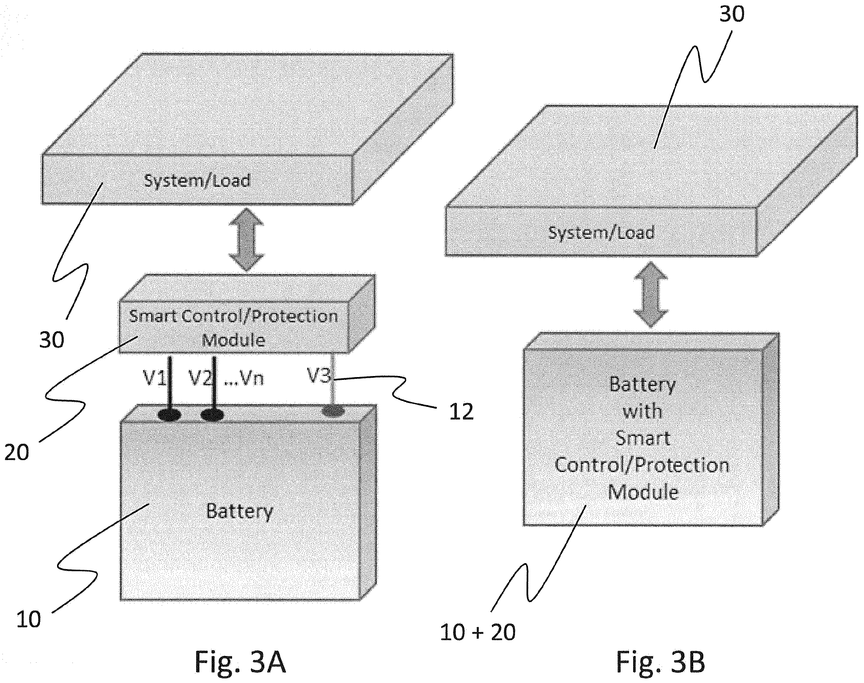

Figs. 3A and 3B illustrate a particular feature of both embodiments of the battery protection module and of the battery management systems respectively shown in Figs. 2A and 2B, which distinguishes them from the known battery protection module and battery management system shown in Fig. 1. As will be recalled from above, the battery protection module 20 in the known battery management system of Fig. 1 is electrically connected to the battery 10 therein via only two electrical contacts, one to the positive and one to the negative terminal of the battery 10. In contrast, as may be seen in Fig. 3A, the battery 10 therein comprises more than two terminals. Instead, battery 10 of Fig. 3A comprises a plurality of terminals having the same polarity as each other, but with different voltages from each other when the battery is fully charged, as well as another terminal having the opposite polarity to the plurality of terminals of the same polarity as each other.

Accordingly, the battery protection module 20 in the battery management system of Fig. 3A comprises a plurality of first electrical contacts 12, labelled V1, V2, ...Vn in Fig. 3A, each of which is configured to be electrically connected to a respective one of a plurality of terminals of battery 10 which have the same polarity as each other, as well as a second electrical contact 12, labelled V3 in Fig. 3A, which is configured to be electrically connected to the terminal of battery 10 which has the opposite polarity to the plurality of terminals of the same polarity as each other. These electrical contacts 12 are distinguished by the feature that whereas there may be only a single electrical contact V3 which is electrically connected to one of the terminals of the battery 10, which may for example be a negative terminal of the battery 10 defining a ground potential, there is a plurality of further electrical contacts V1, V2, ...Vn, each of which is electrically connected to a respective one of the plurality of terminals of battery 10 which have the same polarity as each other, which may for example be positive electrodes of the battery 10 defining potentials which are all different from the ground potential and which are, in general, also different from each other when the battery is fully charged.

In other words, the battery protection module 20 in a battery management system according to the invention is electrically connectable to each one of the terminals of the battery 10 when the battery 10 has more than just two terminals, rather than being electrically connectable to just two terminals of the battery 10 which have opposite polarities to each other. This allows the state of charge of the battery 10 to be controlled and assessed by the battery protection module 20, even if at least two of the terminals of the battery of the same polarity as each other have different nominal voltages from each other when the battery is fully charged. The plurality of connections of the battery protection module 20 to respective ones of the plurality of terminals of the battery 10 which have the same polarity as each other may be either to a plurality of cathodes of the battery 10 or to a plurality of anodes thereof, depending on the design of the battery 10, but it will typically be to each one of a plurality of cathodes thereof.

Whereas in the alternative embodiment of Fig. 3B the battery protection module 20 is integrated with the battery 10, rather than being a separate module, the same principle applies to the embodiment of Fig. 3B as it does to the embodiment of Fig. 3A. In other words, the battery protection module 20 in the battery management system of Fig. 3B also comprises a plurality of electrical contacts 12, all except at least one of which are electrically connected to respective ones of a plurality of terminals of the battery 10 having the same polarity as each other.

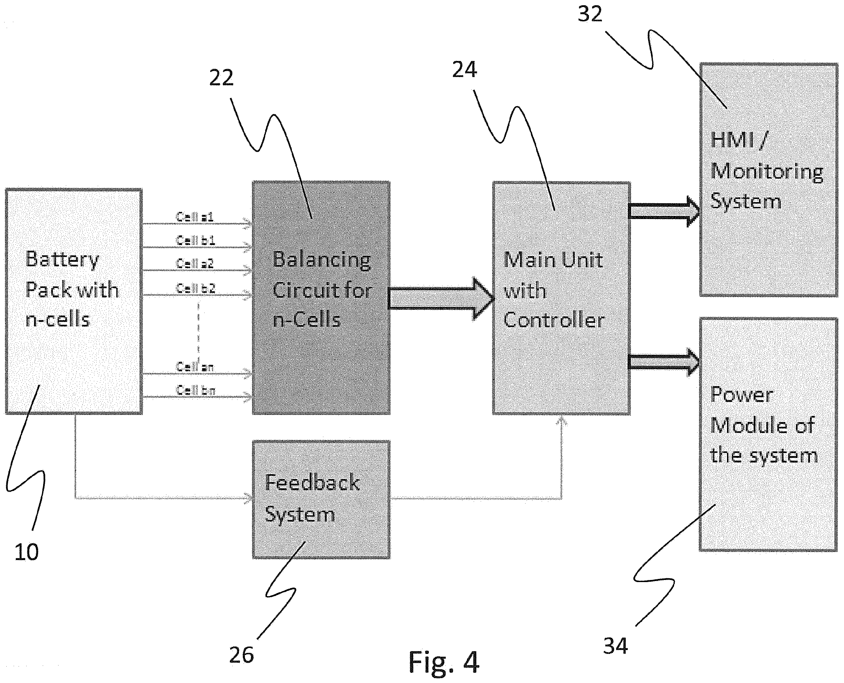

Fig. 4 shows an example of some of the components of any of the battery management systems shown in Figs. 2A to 3B. These battery management systems all comprise a rechargeable battery 10 and a battery protection module 20, which are connectable to an electrical system 30, such as an electrical charger and/or load. A first variant of the battery 10 comprises a plurality of cells, a1, a2, ...an. A second variant of the battery 10 comprises a plurality of different cells b1, b2, ...bn. The battery 10 may have more than just two different variants. Thus the battery protection module 20 can be used with a variety of different battery variants. The battery protection module 20 comprises a balancing circuit 22 for the n cells of the battery 10, a main control unit 24 and a feedback system 26. In all cases, however, regardless of which different variant of the battery 10 is present, the terminals with the same polarity as each other of the battery 10 are all electrically connected to the balancing circuit 22 of the battery protection module 20. The battery 10 is also connected to the feedback system 26. The balancing circuit 22 and the feedback system 26 are both electrically connected to the main control unit 24. The electrical system 30 comprises a human-machine interface (HMI)/battery monitoring system 32 and a power module 34. The power module 34 may comprise such things as a transformer, one or more current-smoothing capacitors and power distribution electronics, for example. The main control unit 24 of the battery protection module 20 is electrically connected to both the user interface 32 and to the power module 34 of the electrical system 30.

During operation, the main control unit 24 controls the balancing circuit 22 to individually charge or discharge each cell a1, a2, ...an; b1, b2, ...bn of the battery 10. The main control unit 24 receives information concerning the status of each cell and/or concerning the status of the battery 10 as a whole via the feedback system 26. The status information may comprise a measurement of the state of charge (SOC) of each cell, the temperature of the battery 10, the state of balance of the cells, and/or other status information. The main control unit 24 provides state of charge information to the HMI interface 32 and receives user commands from the HMI interface 32, and also controls the flow of current between the battery 10 and the power module 34 of the electrical system 30, according to whether the battery 10 is being discharged or charged. The main control unit 24 may communicate with the HMI interface 32 and with the power module 34 of the electrical system 30 via a bus, according to known techniques.

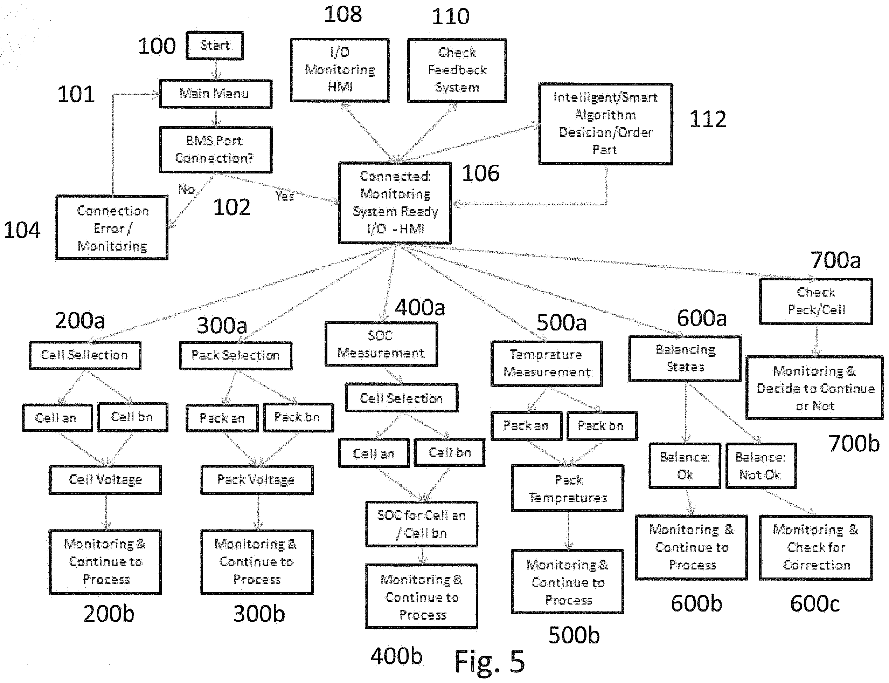

Fig. 5 gives a state diagram illustrating a method of operating a battery management system such as that shown in Fig. 4. The method is typically executed by the main control unit 24 of the battery management system. The method starts operation at box 100 and enters a main menu at box 101. At box 102, the method firstly checks to see whether a port of the battery management system (BMS) is connected to an electrical system 30. If not, the method determines in box 104 that there is a connection error and continues monitoring by returning to the main menu 101. If so, however, the method determines in box 106 that the battery management system is connected to an electrical system 30, that the system is ready, and begins monitoring in and out (I/O) messages from and to the HMI interface 32. At boxes 108, 110 and 112, the method respectively continues I/O monitoring of the HMI interface 32, checks the feedback system 26 for status information concerning each cell in the battery 10 and/or the battery 10 as a whole, and executes an intelligent or smart algorithm and decision module for deciding how to discharge and/or charge the cells of battery 10 based upon the I/O messages received from and sent to HMI interface 32 and on the status information received from feedback system 26. The intelligent or smart algorithm and decision module also provides information which determines how the system should communicate with the HMI interface 32 and with the feedback system 26. The method may carry out these steps 108, 110 and 112 simultaneously and/or sequentially.

Various different aspects of the intelligent or smart algorithm and decision module which may form part of this method are represented in the bottom half of Fig. 5. In the sequence of boxes 200a to 200b, the method selects the type and number of cells of battery 10 to be charged and/or discharged, determines the nominal voltage of the cells when each one is fully charged, and how to process and monitor them. In the sequence of boxes 300a to 300b, the method selects the variety of battery 10, determines the nominal voltage of the battery 10 when fully charged, and how to process and monitor the selected variety of battery. In the sequence of boxes 400a to 400b, the method performs a state of charge (SOC) measurement on one or more of the selected cells, and determines how to process and monitor the selected cells. In the sequence of boxes 500a to 500b, the method performs a temperature measurement of the selected variety of battery 10, determines a nominal temperature of the battery, and how to process and monitor the temperature of the selected variety of battery. In box 600a, the method checks the state of balance of the charge of the cells with each other and either continues to monitor and process the charging/discharging of the cells (box 600b) if the charge balance of the cells is found to be OK, or continues to monitor the cells and checks for a correction (box 600c) to the charging/discharging process if the charge balance of the cells is found not to be OK. In box 700a, the method checks the status of the battery or cell, as appropriate, and in box 700b, decides whether to continue the charging/discharging process or not. If the method eventually decides not to continue the charging/discharging process for all of the cells in the battery, the method then stops.

In summary, therefore, the present invention provides a battery protection circuit at least comprises a plurality of first electrical contacts and a second electrical contact. Each of the plurality of first electrical contacts is configured to be electrically connected to a respective one of a plurality of terminals of a battery having the same polarity as each other and different voltages from each other when the battery is fully charged. The second electrical contact is configured to be electrically connected to a terminal of the battery having the opposite polarity to the plurality of terminals of the same polarity as each other. Such a battery protection circuit may be used with a rechargeable battery having more than two terminals of the same polarity as each other, which have different voltages from each other when the battery is fully charged. Since the battery protection circuit may be connected to terminals which have the same polarity as each other, but which are of different voltages from each other, the same battery protection circuit may also be used with different varieties of battery at different times. In other aspects, the present invention also provides a battery pack comprising a rechargeable battery and such a battery protection circuit, a battery management system comprising a rechargeable battery and such a battery protection circuit, an electrically powered device comprising such a battery management system, and a method of managing a battery using such a battery protection circuit.

**Reference Numerals:**

| | | | |
|---|---|---|---|
| 10 | Rechargeable battery | 100 | Start |
| 12 | Electrical contacts of battery protection module | 101 | Main menu |
| | | 102 | BMS port connection |
| 15 | Battery pack | | |
| | | 104 | Connection error |
| 20 | Battery protection module | | |
| | | 106 | System ready |
| 21 | Integrated circuit | | |
| | | 108 | Monitoring of HMI |
| 22 | Cell balancing circuit of battery | | |
| | protection module | 110 | Check feedback system |
| | | 112 | Algorithm/decision module |
| 23a | Discharge FET | | |
| | | 200a-200b | |
| 23b | Charge FET | | |
| | | | Cell selection |
| 24 | Main control unit of battery | | |
| | protection module | 300a-300b | |
| 25 | Resistor | | Battery pack selection |
| 26 | Feedback system of battery protection module | 400a-400b | |
| | | | State of charge measurement |
| 27 | Capacitor | | |
| | | 500a-500b | |
| 29a, 29b | | | Temperature measurement |
| | Electrical terminals of battery pack | | |
| | | 600a,600b,600c | |
| 30 | Electrical system/device (charger | | |
| | and/or load) | | Cell balancing |
| | | 700a | Check battery/cell |
| 32 | User interface of electrical system | | |
| | | 700b | Stop/continue decision |
| 34 | Power module of electrical system | | |

## Claims

1. A battery protection circuit at least comprising:
a plurality of first electrical contacts (V1, V2, ...Vn), each configured to be electrically connected to a respective one of a plurality of terminals of a battery (10) having the same polarity as each other and different voltages from each other when the battery is fully charged; and
a second electrical contact (V3) configured to be electrically connected to a terminal of the battery (10) having the opposite polarity to the plurality of terminals of the same polarity as each other.

2. A battery protection circuit according to claim 1, wherein the plurality of first electrical contacts (V1, V2, ...Vn) is configured to be electrically connected to respective ones of a plurality of cathodes of the battery (10) and the second electrical contact (V3) is configured to be electrically connected to an anode of the battery (10).

3. A battery protection circuit according to claim 1 or claim 2, at least comprising a balancing circuit (22) configured to balance a charge of each of a plurality of cells (a1, a2, ...an; b1, b2, ...bn) of the battery (10) with each other, even if at least two of the cells (a1, a2, ...an; b1, b2, ...bn) have different nominal voltages from each other when fully charged, via the plurality of first electrical contacts (V1, V2, ...Vn) and the second electrical contact (V3).

4. A battery protection circuit according to claim 3, further comprising:
a feedback system (26) configured to receive status information concerning the status of at least one of the plurality of cells (a1, a2, ...an; b1, b2, ...bn) and the battery (10); and
a control unit (24) configured to receive the status information from the feedback system (26) and to control the balancing circuit (22) to balance the charge of the cells with each other on the basis thereof.

5. A battery pack (15) at least comprising:
a rechargeable battery (10) comprising a plurality of cells (a1, a2, ...an; b1, b2, ...bn), a plurality of terminals having the same polarity as each other and different voltages from each other when the battery is fully charged, and a terminal having the opposite polarity to the plurality of terminals of the same polarity as each other; and
a battery protection module (20) comprising a battery protection circuit according to any one of claims 1 to 4;
wherein the plurality of first electrical contacts (V1, V2, ...Vn) of the battery protection module (20) is electrically connected to the plurality of terminals of the battery (10) having the same polarity as each other, and the second electrical contact (V3) of the battery protection module (20) is electrically connected to the terminal of the battery (10) having the opposite polarity to the plurality of terminals.

6. A battery pack (15) according to claim 5, wherein at least two of the plurality of cells (a1, a2, ...an; b1, b2, ...bn) have different nominal voltages from each other when fully charged.

7. A battery pack (15) according to claim 5 or claim 6, wherein the battery (10) and the battery protection module (20) are separate components of the battery pack (15).

8. A battery pack (15) according to claim 5 or claim 6, wherein the battery (10) and the battery protection module (20) are integrated into a single component of the battery pack (15).

9. A battery management system, at least comprising:
a rechargeable battery (10) comprising a plurality of cells (a1, a2, ...an; b1, b2, ...bn), a plurality of terminals having the same polarity as each other and different voltages from each other when the battery is fully charged, and a terminal having the opposite polarity to the plurality of terminals of the same polarity as each other;
a battery protection module (20) comprising a battery protection circuit according to any one of claims 1 to 4;
a human-machine interface (32) of an electrically powered device (30); and
a power module (34) of the electrically powered device (30);
wherein:
the plurality of first electrical contacts (V1, V2, ...Vn) of the battery protection module (20) is electrically connectable to the plurality of terminals of the battery (10) having the same polarity as each other, and the second electrical contact (V3) of the battery protection module (20) is electrically connectable to the terminal of the battery (10) having the opposite polarity to the plurality of terminals;
the battery protection module (20) is configured to send messages to and receive messages from the human-machine interface (32); and
the battery (10) is electrically connectable to the power module (34) of the electrically powered device (30) in a circuit comprising one of the plurality of terminals of the battery (10) having the same polarity as each other and the terminal of the battery (10) having the opposite polarity to the plurality of terminals of the same polarity.

10. A battery management system according to claim 9, wherein at least two of the plurality of cells (a1, a2, ...an; b1, b2, ...bn) have different nominal voltages from each other when fully charged.

11. An electrically powered device (30) comprising a battery management system according to claim 9 or claim 10.

12. A method of managing a battery, wherein the battery comprises a plurality of cells (a1, a2, ...an; b1, b2, ...bn), a plurality of terminals having the same polarity as each other and different voltages from each other when the battery is fully charged, and a terminal having the opposite polarity to the plurality of terminals of the same polarity as each other, the method at least comprising:
electrically connecting (106) a battery protection circuit to the battery, comprising connecting each one of a plurality of first electrical contacts (V1, V2, ...Vn) of the battery protection circuit to a respective one of the plurality of terminals of the battery (10) having the same polarity as each other, and connecting a second electrical contact (V3) of the battery protection circuit to the terminal of the battery (10) having the opposite polarity to the plurality of terminals of the same polarity as each other;
monitoring (110) status information concerning at least one of the plurality of cells and the battery; and
charging or discharging (112) at least one of the cells at least partially on the basis of the status information.

13. A method of managing a battery according to claim 12, further comprising:
selecting (200a; 300a) at least one of the plurality of cells and the battery; and
wherein monitoring (110) the status information comprises measuring (200b; 300b) a voltage of the selected ones of the cells and/or battery.

14. A method according to claim 12 or claim 13, wherein monitoring (110) the status information comprises at least one of:
measuring (400a) a state of charge of a selected one of the cells;
measuring (500a) a temperature of the battery; and
measuring (600a) a state of balance of the charge of the plurality of cells with each other.

15. A method of managing a battery according to any one of claims 12 to 14, further comprising at least one of sending and receiving (108) a message from a human-machine interface; and
charging or discharging (112) at least one of the cells at least partially on the basis of the message.
